Europäisches Patentamt

European Patent Office

Office européen des brevets

(11) Veröffentlichungsnummer: **0 158 849**
**B1**

(12) # EUROPÄISCHE PATENTSCHRIFT

(45) Veröffentlichungstag der Patentschrift:
13.01.88

(51) Int. Cl.⁴: **G 21 F 5/00,** G 21 C 19/40

(21) Anmeldenummer: **85103219.3**

(22) Anmeldetag: **20.03.85**

(54) Einsatzkorb für Transport- und Lagerbehälter.

(30) Priorität: **10.04.84 DE 3413393**

(43) Veröffentlichungstag der Anmeldung:
**23.10.85 Patentblatt 85/43**

(45) Bekanntmachung des Hinweises auf die Patenterteilung:
**13.01.88 Patentblatt 88/2**

(84) Benannte Vertragsstaaten:
**BE CH DE FR GB LI SE**

(56) Entgegenhaltungen:
EP-A-0 020 948
CH-A-622 903
FR-A-2 404 284
US-A-3 119 933
US-A-4 124 445
US-A-4 143 276

(73) Patentinhaber: **TRANSNUKLEAR GmbH, Postfach
11 00 30 Rodenbacher Chaussee 6, D-6450 Hanau
11 (DE)**

(72) Erfinder: **Srostlik, Peter, Hahnenkammstrasse 2,
D-6457 Maintal 4 (DE)**
Erfinder: **Botzem, Werner, Dipl.- Ing.,
Wolfswingert 12, D-8755 Alzenau (DE)**
Erfinder: **Anspach, Walter, Dipl.- Ing.,
Grünaustrasse 11, D-6450 Hanau 9 (DE)**

(74) Vertreter: **Nowak, Gerhard, DEGUSSA AG
Fachbereich Patente Rodenbacher Chaussee
Postfach 1345, D-6450 Hanau 1 (DE)**

## Beschreibung

Gegenstand der Erfindung ist ein runder answechselbarer Einsatzkorb für Transport- und/oder Lagerbehälter mit Schächten zur Aufnahme von länglichen Kernreaktor-Brennelementen.

Auswechselbare Einsatzkörbe sind erforderlich, um gleichzeitig mehrere abgebrannte Brennelemente aus Kernreaktoren in einem vorgegebenen Abstand zueinander in Transport- und/oder Lagerbehältern, die beispielsweise als Abschirmbehälter mit Kühlrippen ausgebildet sind, unterzubringen. Dabei sind die erforderlichen Brennelementpositionen im Einsatzkorb als Schachte ausgebildet, die der Querschnitsform der Brennelemente angepaßt sind.

Einsatzkörbe müssen ausreichend stabil gefertigt sein um den mechanischen Belastungen während ihrer Handhabung beim Beladen während des Transportes und bei Strörfällen z. B. beim Absturz, standzuhalten. Sie müssen ferner in der Lage sein, die Nachzerfallswärme von den im Einsatzkorb befindlichen Brennelementen an die Wand des Transportbehälters abzugeben. In der Regel ist der Einsatzkorb mit sogenannten Neutronengiften zur Kritikalitätskontrolle versehen.

In der BE-GM 78 33 030 ist ein Einsatzkorb als Gußkörperbeschrieben. Nachteilig ist hierbei, daß eine sehr aufwendige Gießporm erforderlich ist, die insbesondere bei kleinen Stückzahlen die Fertigungskosten stark belasten. Ferner sind der Gestaltung durch gießtechnische Erfordernisse enge Grenzen gesetzt. Reparaturen sind nur in geringem Maße möglich, besonders Fertigungstoleranzen können nur schwer eingehalten werden. Bei Fehlgüssen entstehen hohe Ausschußkosten.

Es sind auch Einsatzkörbe für Transportbehälter bekannt, die als Schweißkonstruktion ausgeführt sind. Um die erforderliche Festigkeit zu erreichen, sind Schweißnähte mit großem Querschnitt erforderlich. Diese verursachen Wärmespannungen und Verzüge durch die von den Brennelementen abgegebene Nachzerfallswärme, welche bereits bei der Auslegung der Schachtabmessungen und bei der Kritikalitätsberechnung berücksichtigt werden müssen. Es resuliert als weiterer Nachteil eine schlechte Ausnutzung des Korbquerschnittes bzw. die Unterbringung einer nur verhältnismäßig geringen Anzahl von Brennelementen im Korb bzw. dem Transportbehälter. Die Fertigung einer derartigen Korbkonstruktion ist wegen der besonderen Ansprüchean die Schweißnähte aufwendig, die Nacharbeitskosten - soweit Nacharbeit überhaupt möglich - sind hoch, ebenso die Ausschußkosten.

Der vorliegenden Erfindung lag daher die Aufgabe zugrunde, einen runden auswechselbaren Einsatzkorb für Transport- und/oder Lagerbehälter mit Schächten zur Aufnahme von länglichen Kernreaktor-Brennelementen zu schaffen, der eine große Volumenausnutzung für die Brennelemente ermöglicht, kritikalitätssicher aufgebaut ist, die Nachzerfallswärme an die Wand des Transportbehälters gut abgibt, einfach und in großen Stückzahlen besonders rationell, mit hoher Präzision und preiswert herstellbar ist, wobei Ausschußkosten weitgehend vermieden werden können, und der besonders reparatur- und umbaufreundlich gestaltet ist.

Die Aufgabe wurde erfindungsgemäß dadurch gelöst, daß die kreisförmige Außenwand des Korbes aus Ankerrandsegmenten und Randzwischensegmenten zusammengesetzt ist, daß die Schächte aus neutronengifthaltigen Platten mittels an den Platten befindlichen zahnartigen Ausarbeitungen untereinander bzw. mit in den Ankerrandsegmenten befindlichen Aussparungen verzahnt zusammengesteckt sind, daß die Abstände der Schächte untereinander durch kreuzförmige Abstandshalter und durch Abstandshalter, die über Stege mit dem Randzwischensegment verbunden sind, fixiert sind, daß die zusammengesteckten Schächte quer zur Erstreckungsrichtung der Schächte über Zuganker, die durch Bohrungen der kreuzförmigen Abstandshalter geführt sind und deren Widerlager die Ankerrandsegmente darstellen, zu einer festen Einheit lösbar zusammengespannt sind.

In einer hinsichtlich der Einführung von Brennelementen besonders günstigen Ausgestaltung des Einsatzkorbes ist an der oberen Stirnseite der fest zusammengespannten Einheit ein Kopfstück befestigt, das Durchführungsöffungen enthält, die in Geometrie und position den Schächten entsprechen, wobei die Durchführungsöffungen Aufweitungen als Einführungshilfe für die Brennelemente aufweisen.

In manchen Fällen ist es besonders vorteilhaft, wenn die fest zusammengespannte Einheit mit einem Boden, der mit Bohrungen zur Aufnahme von Endfittings, die sich an den Brennelementen befinden, versehen ist.

Weiterhin ist es günstig, wenn die Ankersegmente und/oder die Randzwischensegmente mit den Stegen und/oder die Abstandshalter sich aus neutronengifthaltigem Material zusammensetzen und das neutronengifthaltige Material aus einer Bor-Aluminiumlegierung besteht.

Anhand der schematischen Figuren I bis V soll der erfindungsgemäße Einsatzkorb beispielhaft näher erläutert werden.

Es bedeuten

Fig. I: Einsatzkorb-Längsschnitt, Übersicht;

Fig. II: Einsatzkorb-Querschnitt, Übersicht;

Fig. III: Schachtausbildung;

Fig. IV: Schachtplatten-Verzahnung untereinander;

Fig. V: Verzahnung Schachtplatte-Ankerrandsegment.

Die kreisförmige Außenwand eines runden Einsatzkorbes (1) aus Aluminiumbasiswerkstoff, Korbhöhe ca. 5 m, Korbdurchmesser ca. 1 m, ist aus Ankerrandsegmenten (4) und Randzwischensegmenten (11) zusammengesetzt. Neutronengifthaltige Platten (3) bilden die Aufnahmeschächte (2) zur Aufnahme von bestrahlten Brennelementen (20) aus Druckwasser- bzw. Siedewasserreaktoren. Die Platten (3) sind mittels an den Platten (3) befindlichen zahnartigen Ausarbeitungen (15) untereinander zusammengesteckt. Die in den Außenpositionen befindlichen Schächte (2a) werden aus drei zusammengesteckten Platten und der Innenwand der Ankerrandsegmente (4) gebildet, wobei die zahnartigen Ausarbeitungen (15) dieser Platten (3a) in einer glatt durchgehende Nut (10) an der Innenseite (9) des Ankerrandsegmentes (4) geführt sind und die zahnartigen Ausarbeitungen (15) weiterer Platten (3b) mit Aussperrungen (25), die sich im Ankerrandsegment (4) befinden, zusammengesteckt sind. Die Verzahnung ist so gewählt, daß ein Spalt (16) für das Wärmespiel der Platten (3) verbleibt, welches bei der Ausdehnung durch die Nachzerfallswärme durch die in den Schächten befindlichen Brennelemente berücksichtigt werden muß.

Das gilt auch für eine Wärmebelastung, verursacht durch ein Schadensfeuer in einer Unfallsituation.

Die Schächte (2) untereinander sind durch kreuzförmige Abstandshalter (8) über die gesamte Korbhöhe fixiert. In den Eckpositionen des kreuzförmigen Schachtrasters des Einsatzkorbes befinden sich Abstandshalter (13) in analoger Funktion wie die Abstandshalter (8), nur sind sie über Stege (12) mit dem Randzwischensegment (11) verbunden.

Die Schächte (2) sind radial über Zuganker (6), die durch Bohrungen (14) der kreuzförmigen Abstandshalter (8) geführt sind, und deren Widerlager die Ankerrandsegmente (4) darstelen, zu einer festen Einheit, z. B. durch Muttern (7), die in einer Vertiefung (5) des Ankerrandsegmentes (4) versent sind, lösbar zusammengespannt. Zuganker (6) und Muttern (7) sind aus rostfreiem Stahl gefertigt. Es ist zweckmäßig Zuganker (6) in mehreren Ebenen übereinander, z. B. im Abstand von ca. 0,5 m, anzuordnen.

Die gesamte festverspannte, aber lösbare Einheit kann auch aus mehreren übereinander gelagerten Schüssen zusammengesetzt sein, die durch Anker (22) parallel zur Längsachse des Korbes (1) ferbunden sind.

Die fest verspannte Einheit ist mit einem Boden (17) verbunden, der entweder angeschraubt ist, oder aber auch mittels einer ausreichenden Anzahl von Ankern (22) befestigt ist. Der Boden (17) enthält Bohrungen (19) zur Aufnahme der unteren Endfittings (21) der Brennelemente (20). Der Boden kann aus Aluminium oder rostfreiem Stahl gefertigt sein.

An der oberen Stirnseite (27) der festen Einheit ist ein Kopfstück (23) befestigt, das Einführungsöffnungen (26) enthält, die der Schachtgeometrie und der Schachtposition entsprechen.

Die Einführungsöffnungen (26) sind mit Anschrägungen (24) als Brennelement-Einführungshilfe versehen.

Der Boden (17), das Kopfstück (2 ) sowie fallweise die einzelnen Schüsse der zusammengespannten Einheit können mit Hilfe von Stifen (18) in ihrer Position zueinander fixiert sein.

Der Boden (17) kann mit einem unterbrochenen Ring (28) versehen sein. Aus dem dadurch gebildeten Wassersammelraum (29) kann das beim Beladen des Einsatzkorbes (1) mit Brennelementen angesammelte Wasser leicht abgepumpt werden.

Alle Einzelteile, aus denen der erfindungsgemäße Korb zusammengesetzt ist, können wegen ihrer Handlichkeit und des begrenzten Gewichtes sowie wegen der einfachen Geometrie mit hoher Präzision hergestellt werden. Eine ansonsten fertigungtechnisch erforderliche Überdimensionierung entfällt. Dadurch ist eine optimale Volumenausnutzung für die Brennelemente möglich. So ist die Unterbringung von 12 - 24 Brennelementen ohne Schwierigkeiten möglich. Durch die präzise Herstellungsmölichkeit der Einzelteile können die Schächte so eng dimensioniert werden, daß eine ausgezeichnete Ableitung der Nachzerfallswässer auch bei großer Brennelementbeladung nunmehr problemlos ist. Da die Innenschächte herausziehbar sind und der Korb rasch zerlegbar ist, können Reparaturen schnell ausgeführt und einzelne Teile bequem ausgewechselt werden. Behälterausschuß entfällt, da alle Einzelteile geprüft werden können. Die Großserienfertigung ist kostengünstig möglich. Die auswechselbaren Schachtplatten ermöglichen fallweise auch die Anpassung der Neutronenvergiftung des Korbes.

Überdies kann das aus Einzenteilen bestehende Strukturmaterial ganz oder teilweise aus neutronengifthantigem Material, beispielsweise aus einer Bor-Aluminiumlegierung, bestehen. Derartige relativ kleine Einzelteile lassen sich auch bei bearbeitungsmäßig schwieriger Legierungszusammensetzung noch hinreichend präzise bearbeiten. Gegenüber einem gegossenen Einsatzkorb oder einem geschweißten Einsatzkorb, lassen sich Einsparungen bis zu 50 % Herstellungskosten erzielen.

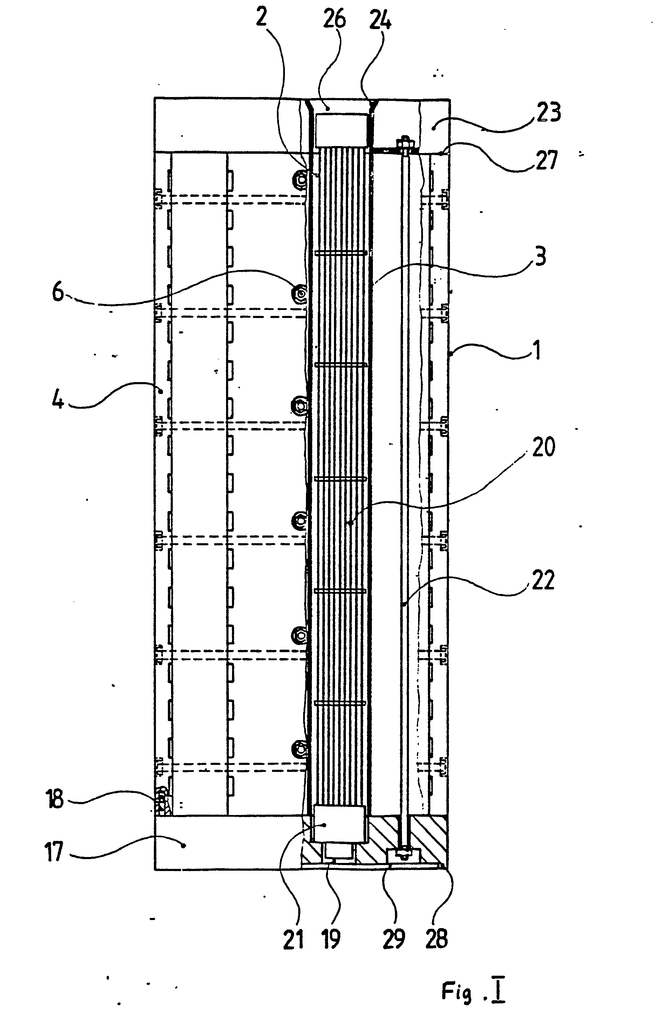

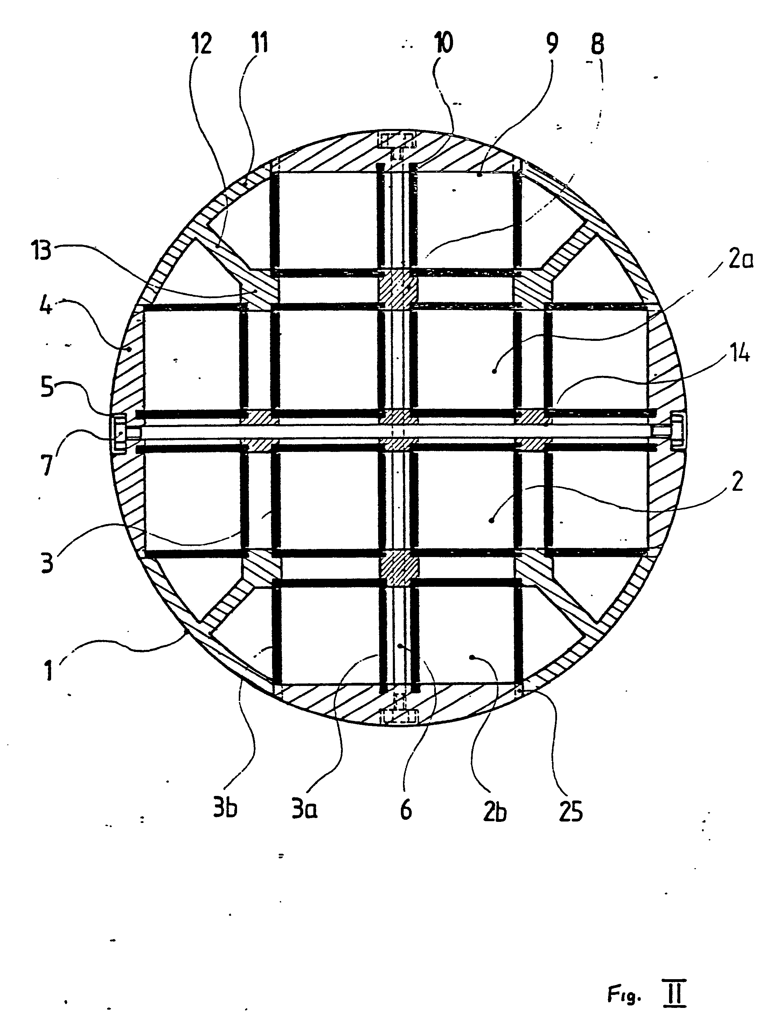

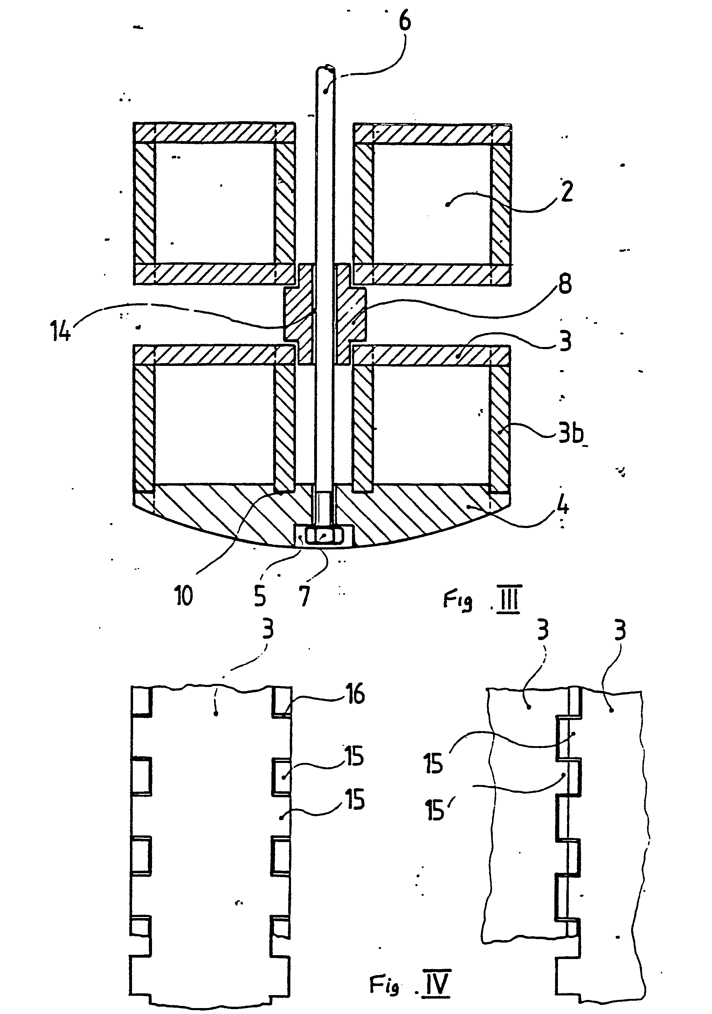

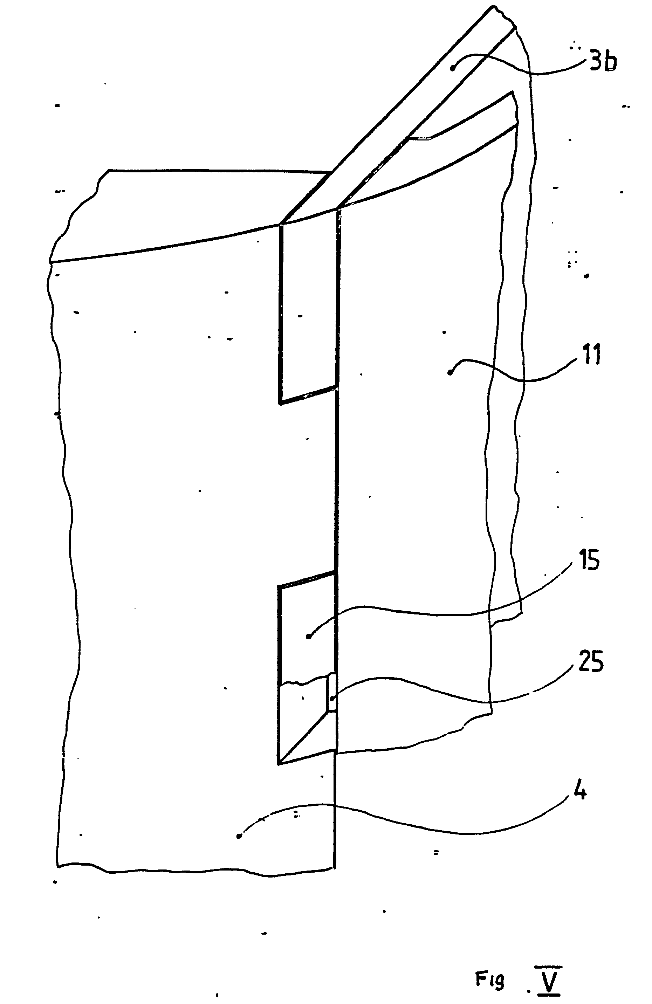

**Patentansprüche**

1. Runder auswechselbarer Einsatzkorb für Transport- und/oder Lagerbehälter mit Schächten zur Aufnahme von länglichen Kernreaktor-Brennelementen, dadurch gekennzeichnet, daß die kreisförmige Außenwand des Korbes (1) aus Ankerrandsegmenten (4) und Randzwischensegmenten (11) zusammengesetzt ist, daß die Schächte (2) aus neutronengifthaltigen Platten (3) mittels an den Platten befindlichen zahnartigen Ausarbeitungen (15) untereinander bzw. mit in den Ankerrandsegmenten (4) befindlichen Aussparungen (25) verzahnt zusammengesteckt sind, daß die Abstände der Schächte (2) untereinander durch kreuzförmige Abstandhalter (8) und durch Abstandshalter (13), die über Stege (12) mit dem Randzwischensegment (11) verbunden sind, fixiert sind, daß die zusammengesteckten Schächte (2) quer zur Erstreckungsrichtung der Schächte über Zuganker (6), die durch Bohrungen (14) der kreuzförmigen Abstandshalter (8) geführt sind und deren Widerlager die Ankerrandsegmente (4) darstellen, zu einer festen Einheit lösbar zusammengespannt sind.

2. Runder auswechselbarer Einsatzkorb nach Anspruch 1, dadurch gekennzeichnet, daß an der oberen Stirnseite (27) der fest zusammengespannten Einheit ein Kopfstück (23) befestigt ist, das Durchführungsöffnungen (26) enthält, die in Geometrie und Position den Schächten (2) entsprechen, wobei die Durchführungsöffnungen (26) Aufweitungen (24) als Einführungshälfe für die Brennelemente (20) aufweisen.

3. Runder auswechselbarer Einsatzkorb nach Anspruch 1 und 2, dadurch gekennzeichnet, daß die fest zusammengespannte Einheit mit einem Boden (17), der Bohrungen (19) zur Aufnahme von Endfittings (21) die sich an den Brennelementen (20) befinden, versehen ist.

4. Runder auswechselbarer Einsatzkorb nach den Ansprüchen 1 bis 3, dadurch gekennzeichnet, daß die Ankerrandsegmente (4) und/oder die Randzwischensegmente (11) mit den Stegen (12) und/oder die Abstandshalter (8, 13) aus neutronengifthaltigem Material bestehen.

5. Runder auswechselbarer Einsatzkorb nach den Ansprüchen 1 bis 4, dadurch gekennzeichnet, daß das neutronengifthantige Material aus einer Bor-Aluminiumlegierung besteht.

## Claims

1. A round exchangeable insert basket for transport and/or storage containers with shafts for receiving oblong nuclear reactor fuel elements, characterised in that the circular outer wall of the basket (1) is made up of fixing rim segments (4) and rim intermediate sedments (11), in that the shafts (2) are meshed together from nuclear poison-containing panels (3) by means of worked-out teeth (15) located on the panels or with recesses (25) located in the fixing rim segments (4), in that the intervals between the shafts (2) are fixed by cross-shaped spacer members (8) and by spacer members (13) which are connected to the rim intermediate segment (11) via webs (12), in that the shafts (2) which are put together are clamped together detachably to form a fixed unit transversely to the length of the shafts via tie rods (6) which are guided through openings (14) in the cross-shaped spacer members (8) and the abutments thereof form the fixing rim segments (4).

2. A round exchangeable insert basket according to Claim 1, characterised in that on the upper end face (27) of the rigidly clamped unit there is fixed a head piece (23) which contains orifices (26) corresponding to the shafts (2) in geometry and position, wherein the orifices (26) have widened regions (24) to assist introduction of the fuel elements (20).

3. A round exchangeable insert basket according to Claims 1 and 2, characterised in that the rigidly clamped unit is provided with a base (17), which contains holes (19) for receiving end fittings (21) located on the fuel elements (20).

4. A round exchangeable insert basket according to Claims 1 to 3, characterised in that the fixing rim segments (4) and/ or the rim intermediate segments (11) with the webs (12) and/ or the spacer members (8, 13) are composed of nuclear poison-containing material.

5. A round exchangeable insert basket according to Claims 1 to 4, characterised in that the nuclear poison-containing material is composed of a boron aluminium alloy.

## Revendications

1. Panier de chargement circulaire démontable pour conteneur de transport et/ou de stockage, alvéoles ou compartiments verticaux pour la réception d'éléments combustibles allongés, caractérisé en ce que la paroi externe circulaire du panier (1) est composée de segments périphériques d'ancrage (4) et de segments périphériques intermédiaires (11), en ce que les alvéoles (2) constituées de plaques (3) contenant des poisons nucléaires, sont assemblées au moyen de saillies (15) en forme de dents, se trouvant sur les plaques, imbriquées les unes aux autres ou respectivement avec des évidements (25) se trouvant dans les segments périphériques d'ancrage (4), en ce que les intervalles entre les alvéoles (2) sont interconnectées par des espaceurs cruciformes (8) et par des espaceurs (13) qui sont fixés par des traverses (12) au segment périphérique intermédiaire (11), en ce que les alvéoles assemblées (2) sont réunies sous tension de façon amovible, en une unité solide, transversalement par rapport au sens de l'extension des compartiments verticaux ou alvéoles, par des tirants d'ancrage (6) qui sont passés dans des alésages (14) des espaceurs cruciformes (8), et dont les butées d'appui sont constituées par les segments périphériques d'ancrage (4).

2. Panier de chargement circulaire démontable selon la revendication 1, caractérisé en ce que sur la face frontale supérieure (27) de l'unité solidement montée sous tension, est fixée une pièce de tête (23) qui comporte des ouvertures tranversantes (26) qui correspondent, en géométrie et en position, aux compartiments verticaux (2), les ouvertures traversantes (26) présentant des élargissements (24) facilitant l'introduction des éléments combustibles (20).

3. Panier de chargement circulaire démontable selon la revendication 1 ou 2, caractérisé en ce que l'unité solidement montée sous tension est munie d'un fond (17) comportant des alésages (19) pour logement des extrémités (21) qui se trouvent sur les éléments combustibles (20).

4. Panier de chargement circulaire démontable selon l'une quelconque des revendications 1 à 3, caractérisé en ce que les segments périphériques d'ancrage (4) et/ou les segments périphériques intermédiaires (11) avec les traverses (12) et/ou les espaceurs (8, 13) sont constitués d'un matériau contenant un poison nucléaire.

5. Panier de chargement circulaire démontable selon l'une quelconque des revendications 1 à 4, caractérisé en ce que le matériau contenant un poison nucléaire consiste en un alliage bore-aluminium.

Fig . I

Fig. II

6

2

8

14

3

3b

4

10    5    7

Fig. III

3

3    3

16

15

15

15

15

15'

Fig. IV

Fig $\underline{V}$